# EUROPEAN PATENT APPLICATION

(11) **EP 3 376 158 A1**
(43) Date of publication of application: **19.09.2018**
(21) Application number: 18382070.3
(22) Date of filing: 08.02.2018
(51) Int. Cl.: G01B 11/245, G01B 11/27, B21C 51/00

(54) **POSITIONING VERIFICATION APPARATUS FOR METAL TUBULAR PIECES, VERIFICATION EQUIPMENT AND POSITIONING VERIFICATION METHOD**

(30) Priority: 17.03.2017 ES 201730365
(71) Applicant: La Farga Tub, S.L., 08508 Barcelona (ES)
(72) Inventor: FONT PUIG, Gabriel, 08508 BARCELONA (ES); SUAREZ ESPIDO, Manuel, 08508 BARCELONA (ES); MAGNET CASADESUS, Jordi, 08508 BARCELONA (ES); PUJOL TORRUELLA, Marc, 08508 BARCELONA (ES)
(74) Representative: Isern Patentes y Marcas S.L.

(57) **Abstract**

A positioning and alignment verification apparatus for parts or components that intervene in an extrusion process of metal tubular pieces of an extruder press, **characterized** by the fact that it comprises a casing provided with a through hole through which the part or component to be verified can be passed, including at least three laser beam emitting optical sensors (6) arranged in a stationary way in the casing, said optical sensors being attached to a control unit through electrical connections, and arranged separately and radially around the through hole (7), such that the laser beam of each optical sensor (6) is oriented towards the central longitudinal axis defined by the through hole, the casing including cooling means to cool each optical sensor (6).

## Description

### OBJECT OF THE INVENTION

The present application relates to a positioning and alignment verification apparatus for parts or components that intervene in an extrusion process of metal tubular pieces of an extruder press, in which each of said parts or components to be verified defines a central axis.

More specifically, the invention proposes the development of a verification apparatus for determining the positioning and alignment of different parts that intervene in the extrusion process carried out by means of extruder presses with tubular profiles or any other shape that include continuous puncturing, such as, for example, tubes, square or rectangular transverse cross section profiles, or any other profile that includes continuous puncturing.

### BACKGROUND OF THE INVENTION

In industrial processes for manufacturing elongated cylindrical and/or tubular pieces made by extruder presses made from ferromagnetic or non-ferromagnetic metal, such as, for example, copper, aluminum or steel, it is important to control the dimensions and/or dimensional tolerances of the piece, for example, by controlling the eccentricity, cylindricity, etc.

As is well known, eccentricity is an indicative value of the concentricity of a tube and is calculated by measuring the thicknesses of the tube along the entire circumference thereof.

To carry out the verification, verifier apparatuses are known in the state of the art, such as, for example, gauges with styli or other measuring apparatuses that are handled by an expert or an operator, wherein the alignments of each part that intervenes in the extrusion process of the presses are controlled through the contact of the stylus on the outer surface of the piece to be controlled, the alignment of which is to be verified.

However, said controls are carried out manually, such that the verification is subject to the criteria of one or several people, meaning that errors may be made when carrying out the control since high reliability cannot be ensured.

In addition, the applicant is currently unaware of the existence of an invention having all the characteristics described herein.

### DESCRIPTION OF THE INVENTION

The present invention has been developed with the aim of providing a verifier apparatus that constitutes a novelty within the field of application, and solves the disadvantages mentioned above while also contributing other additional advantages, which will become evident from the description provided below.

This apparatus is provided to verify the dimensions of the elements or pieces responsible for obtaining a tubular-shaped body from material in a melted state in a press, with the aim of predicting the value of eccentricity prior to the production of the tube to be manufactured, in order to correct and/or carry out the adjustments needed before producing the tubular body, thus avoiding problems in the process.

Therefore, an object of the present invention is to provide a positioning and alignment verification apparatus for different pieces and parts that intervene in the extrusion process of the extruder presses with tubular profiles of any type, profiles produced by extrusion having a continuous hole along the entire length of the extruded profile, which are circular or have any other profile that requires a constant and uniform thickness.

In particular, the invention is characterized by the fact that it comprises a casing provided with a through hole through which the tubular piece to be verified, such as, for example, a puncturing mandrel of an extruder press, can be passed, in which said mandrel should be perfectly aligned and centered with regard to the rest of the parts that intervene in the extrusion process, including at least three light beam emitting optical sensors arranged in a stationary way and angularly equidistant in the casing, preferably inside the casing.

Said sensors are attached to a control unit through electrical connections, and they are arranged separately and radially around the through hole, such that the laser beam of each sensor is oriented towards the central longitudinal axis defined by the through hole. Furthermore, the casing comprises cooling means for cooling each of these optical sensors.

Thanks to these characteristics, a device is obtained to verify, for example, the coaxiality of the axis of the puncturing mandrel with a central axis of symmetry defined by the extruder press, where the verification is carried out in an "smart" way (in other words, with the help of software), such that it is not based on the personal criteria of an operator or qualified person, and therefore makes it possible to increase the degree of reliability during the verification process. Furthermore, this fact makes it possible to avoid physical contact between the verifying means and the puncturing mandrel to be verified via the use of means based on laser technology. This device is especially provided to be placed in the inlet area of an extruder machine, such that it makes it possible to verify the piece to be controlled (puncturing mandrel as it enters the container present in the extruder press).

It is worth mentioning that the use of a laser beam to make the measurements is ideal for pieces which may be at 400ºC in the extruder press, since they are not affected by the temperature unlike other measurement devices, where, due to the high temperature, components or parts (for example, probes) of the measurement apparatus may expand due to the temperature changes.

The arrangement of the cooling means prevents the optical sensors from being damaged due to the overheating thereof caused by the temperature that the pieces of the extruder press to be verified may have; it provides a constant and suitable temperature at all times for the correct operation of the electronic components present inside the casing of the apparatus.

Furthermore, the apparatus includes coupling means to couple the casing to the inlet area of the container of an extruder press with tubular profiles, such that the verification can be carried out at the machine.

Particularly in a preferred embodiment, the cooling means comprise at least an inlet that can be connected to an external fluid supply source, for example, compressed or pressurized air at a pressure of 6 bars, as well as an outlet and channels present inside the casing attached to the inlet and the outlet, in order to circulate a fluid, there being channels with ends oriented towards the optical sensors.

In an alternative embodiment of the invention, the cooling means may comprise an insert that can be coupled to the casing which has a ring-shaped body that internally includes a hydraulic circuit provided with at least one inlet and one outlet for the liquid (such as, for example, water or another cooling liquid) to be circulated throughout the inside of the hydraulic circuit.

Furthermore, the apparatus may include sealing means located between two faces facing each other of the insert and the casing, which prevent the emergence of leaks of the cooling fluid that circulates through the insert towards the area of the casing where the optical sensors are located.

In a preferred embodiment, the sealing means comprise toric joints arranged radially around the hydraulic circuit present inside the insert.

According to another aspect of the invention, each optical sensor is inside a housing that is located in recessed sections present inside the casing. Preferably, each housing is comprised by a box-shaped structure that includes securing means to attach to the casing.

Advantageously, the box structure is made from a plastic material resistant to high temperatures.

One example of plastic material may consist of Teflon® or Teflon-based plastic material, which is a plastic material known to have good thermal properties, in other words, withstand higher temperatures than other plastic materials.

In a preferred construction, the casing that forms the outer part of the apparatus is comprised by two bodies that can be coupled together, which facilitates the mounting and maintenance of the components housed inside the casing.

To facilitate the coupling and mounting of the two halves, guide means present in each of the two front and rear casing bodies may be included.

These guide means comprise a male-female system present in the inner face of each of the two bodies that form the casing.

Furthermore, the casing may include securing means that will make it possible to handle the apparatus, for example, to transport it for the calibration thereof, maintenance tasks, etc.

In a preferred embodiment, the securing means have an extension that protrudes from the casing that includes a through hole to allow a tool to pass through the through hole.

According to a preferred configuration of the invention, the verification apparatus comprises four optical sensors arranged in a cruciform configuration around the through hole.

Preferably, the casing may have an elongated tubular prolongation that extends outwards which allows for the passage of ducts, such that it prevents these ducts from overheating due to the closeness of the tubular piece or extruder mandrel that is being verified. This is especially useful in tubular pieces of steel, copper, etc. where the protruding tube of the forming machine has a high temperature which could melt the ducts with continued heat exposure.

Another aspect of the invention is to provide verification equipment that comprises a moveable table, a verification apparatus such as that described above and calibration means for calibrating the optical sensors present in the verification apparatus.

In one embodiment, the calibration means comprise a cylindrical body that protrudes from the top of a horizontal surface, the cylindrical body being arranged around positioning means of the casing that forms part of the verification apparatus. Said positioning means comprise a ring-shaped protruding element that protrudes from the horizontal surface and is arranged centrally with respect to the cylindrical body.

Likewise, another object of the invention is to provide a positioning verification method, in particular, to verify the coaxiality of a puncturing mandrel of an extruder press with respect to a container of the extruder press itself, which comprises the following steps:
- pass a tubular element, in this case the puncturing mandrel, through a region that is defined by the arrangement of light beam emitting optical sensors distributed radially from each other, such that when passing the puncturing mandrel through the sensors, the laser beams shine on the outer surface of the puncturing mandrel,
- each optical sensor sends an electrical positioning signal of the point upon which the laser beam shines to a control unit as the perforator mandrel to be verified moves linearly,
- compare the values detected by the optical sensors with a value of eccentricity and/or coaxiality previously established in the control unit.

The verification method may include a step for calibrating each optical sensor prior to the operation of the optical sensors.

Other characteristics and advantages of the verification apparatus, object of the present invention, will become clear in light of the description of a preferred, though non-exclusive, embodiment, which, by way of a non-limiting example, is illustrated in the accompanying drawings, wherein:

### BRIEF DESCRIPTION OF THE DRAWINGS

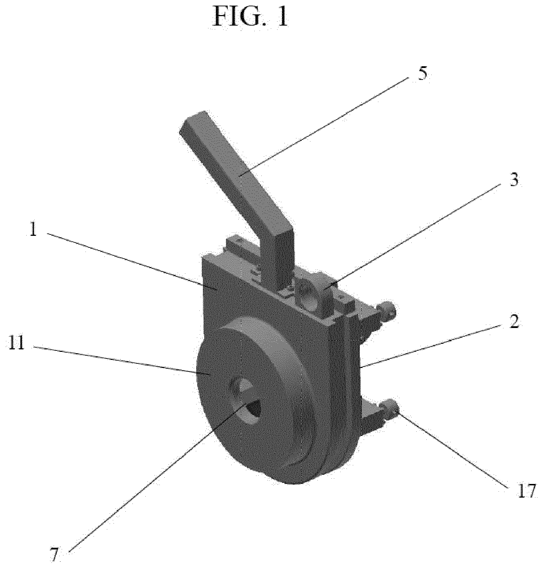

Figure 1 shows a front perspective view of a verification apparatus according to the present invention;

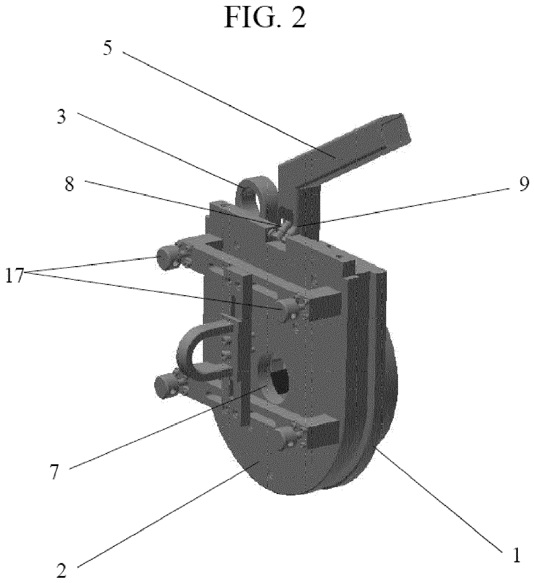

Figure 2 shows a rear perspective view of the verification apparatus shown in Figure 1;
Figure 3 shows a perspective view of one of the halves that forms the body of the casing of the verification apparatus;

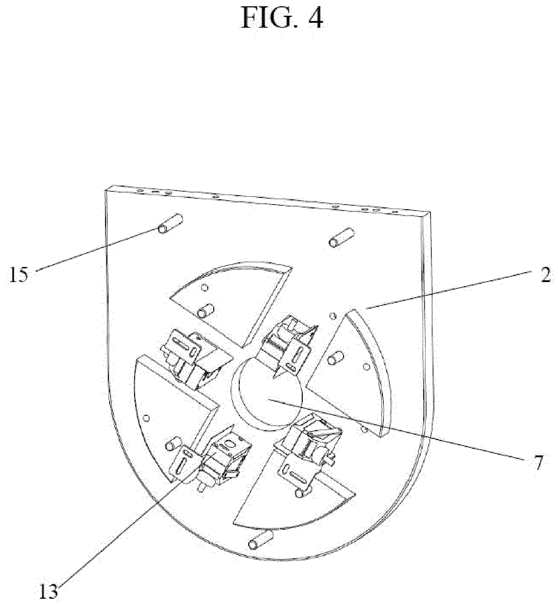

Figure 4 shows a perspective view of the other half that forms the body of the casing of the verification apparatus;
Figure 5 shows a transverse cross section elevation view of the verification apparatus according to the invention;

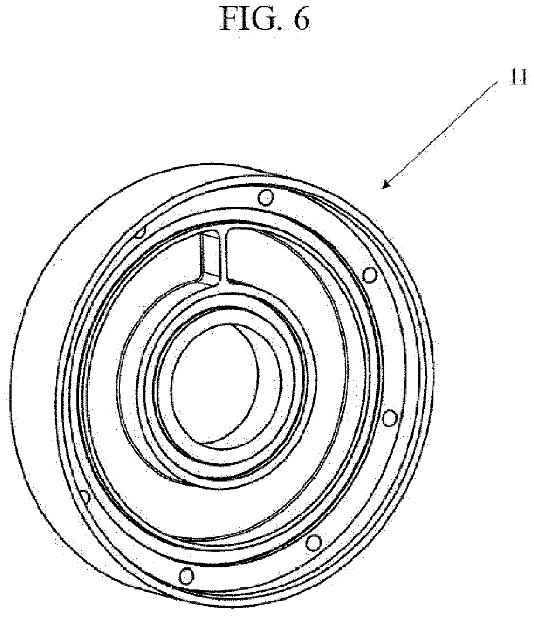

Figure 6 shows a detailed perspective view of the insert that forms part of the cooling means;
Figure 7 shows a perspective view of verification equipment for the apparatus shown in preceding figures; and
Figure 8 shows a perspective view of the verification equipment shown in Figure 7 that includes the verification apparatus.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

As can be seen in the figures attached, one embodiment of the alignment and concentricity verification apparatus for a puncturing mandrel of an extruder press of a ferromagnetic or non-ferromagnetic material comprises a metal casing provided with a through hole through which the puncturing mandrel of the extruder press can be passed. Said casing is comprised by two front and rear casing bodies (1, 2), respectively, that can be coupled together in a condition of use, including a male-female system present in the inner face of each of the two bodies that form the casing, which acts as guide means for facilitating the mounting of the two front and rear casing bodies (1, 2) during the manufacture of the apparatus described in this invention. In this way, lugs (15) present in a casing body, which can be inserted in bores present in the other casing body facing it, are provided.

Furthermore, the casing includes securing means that make it possible to facilitate the handling thereof by an operator manually or with the help of external means or tools. Said securing means have an extension (3) that protrudes from the body of the front casing (1) that includes a through hole (7) that facilitates the coupling of a tool (not shown), for example, a hook or other gripping means, through the through hole (4).

One of the bodies of the casing has an elongated tubular prolongation (5) that extends outwards whereby the cables or electrical connections pass for the operation of the apparatus.

To carry out the verification of the puncturing mandrel of the extruder press, the apparatus includes four laser beam emitting optical sensors (6), arranged in a stationary and cruciform way inside the housing, said sensors being equidistantly separated from each other. The optical sensor (6) used for this case is a class 1 model IL-3 laser sensor supplied by the commercial firm Keyence, with a measurement range of 20-45 mm with a margin of error of 1-5µm.

The optical sensors (6) are attached to a control unit through the electrical connections, preferably arranged separately and radially equidistant around the through hole (7), such that the laser beam of each sensor is oriented towards the central longitudinal axis defined by the through hole (7).

To avoid damaging the optical sensors (6) due to the effect of the temperature of the puncturing mandrel and the container of the extruder press, which is coupled to the verifier device, the casing includes cooling means to cool each optical sensor that is explained below.

Now making particular reference to an embodiment of the cooling means, these cooling means comprise at least one inlet (8) that can be connected to an external fluid supply source, one outlet (9) and channels present inside the casing attached to the inlet (8) and the outlet (9) to circulate a fluid, there being channels with hole-like ends oriented towards each optical sensor (6).

In an alternative embodiment to that provided above, the cooling means may be comprised of an insert (11) with a generally cylindrical shape that can be coupled to the front face of the casing body that has a ring-shaped body that internally includes a hydraulic circuit formed by ring-shaped slots in an inlet and an outlet for the liquid to be circulated throughout the inside of the hydraulic circuit.

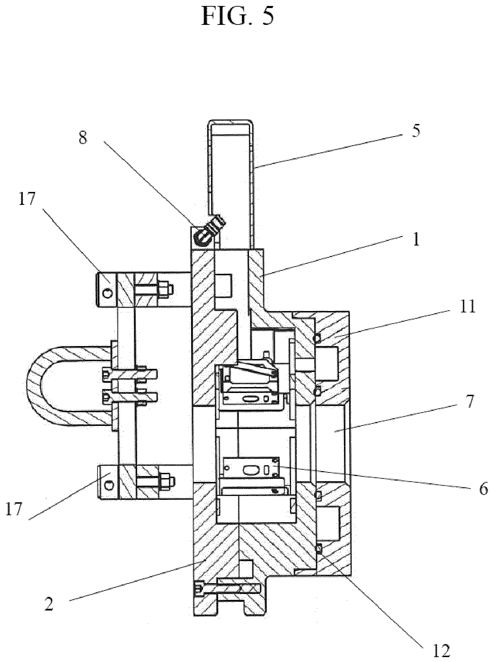

Furthermore, sealing means placed between two faces facing each other of the insert and the casing body are provided, comprising a pair of toric joints (12) separated from each other and arranged radially around the hydraulic circuit, as shown in Figure 5.

To properly protect each optical sensor (6) from high temperatures, the sensors are placed inside a housing (13) that is located in recessed sections (14) present inside the front casing body (1).

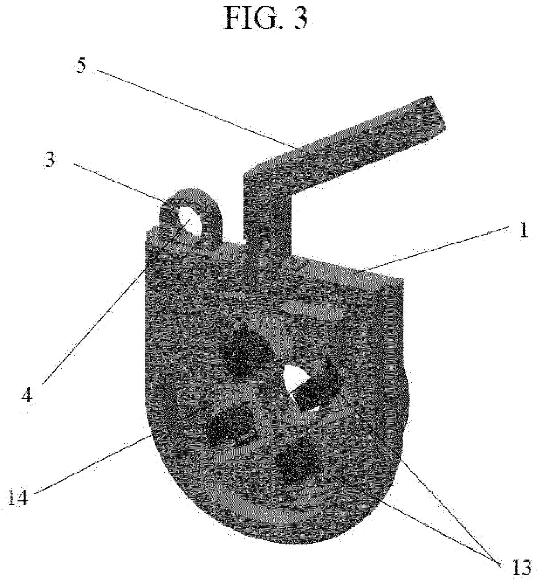

As can be seen more clearly in Figure 3, each housing (13) is comprised by a box-shaped structure made from Teflon material and defined by lateral walls that includes securing means to attach to the casing.

On the other hand, the outer face of the rear casing body (2) includes coupling means to couple the casing to the inlet area or mouthpiece of the container of the extruder press. These coupling means are comprised by a series of projections (17) that protrude from the outer face of the rear casing body (2) which act as positioners that can be fit into specifically designed areas, for example, in the inlet area or mouthpiece of the container of the extruder press.

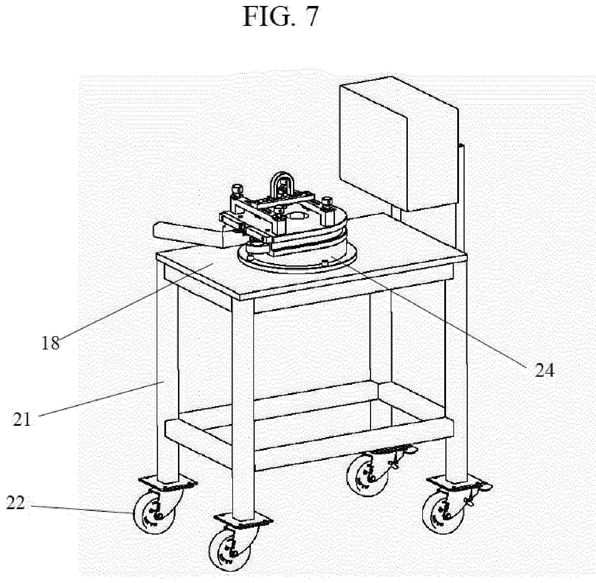

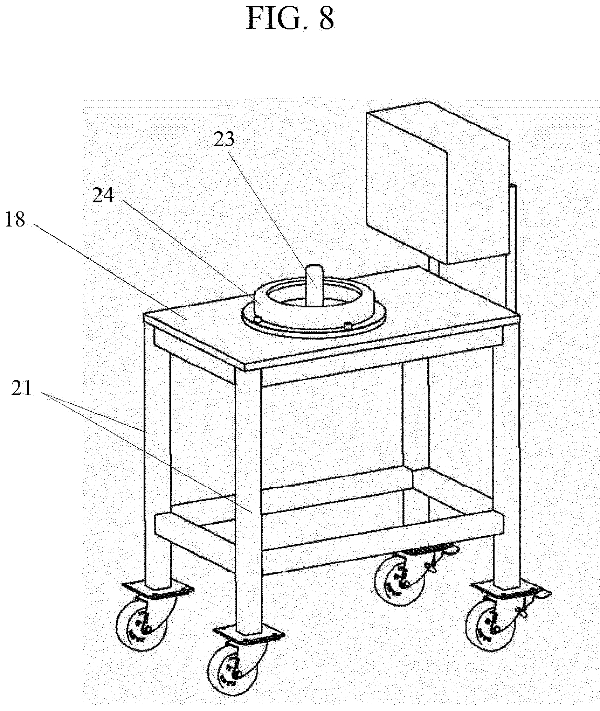

In Figures 7 and 8, verification equipment is shown that comprises a table (18) provided with a horizontal surface supported by vertical legs (21), with wheels (22) optionally provided at the bottom, which includes calibration means provided to calibrate the optical sensors present in the verification apparatus before operating and mounting the verification apparatus in the extruder press with tubes.

With regard to the calibration means, they comprise a cylindrical body (23) that protrudes from the top of the horizontal surface (20) of the table (18), the cylindrical body being arranged around positioning means of the casing that forms part of the verification apparatus.

The positioning means comprise a ring-shaped protruding element (24) that protrudes from the horizontal surface arranged centrally with respect to the cylindrical body (23).

The calibration of the optical sensors present in the verification apparatus described above, prior to the use thereof in order to verify the positioning of metal tubular pieces, is carried out by the verification equipment described, which comprises the calibration means, through the following steps:
i) place the verification apparatus inside the cylindrical body (23), such that the cylindrical body (23) is arranged through the through hole (4) of the verification apparatus of the invention.
ii) determine the existing deviation for the distance between each light beam emitting optical sensor (6) and the ring-shaped protruding element (24), and the ideal distance between each of these laser beam emitting optical sensors (6) and the ring-shaped protruding element (24).
iii) correct this existing deviation for the distance between each light beam emitting optical sensor (6) and the ring-shaped protruding element (24).

The ideal distance between each laser beam emitting optical sensor (6) and the ring-shaped protruding element (24) is the distance at which all optical sensors (6) are found at the same distance with respect to the ring-shaped protruding element (24).

The details, shapes, dimensions and other accessory elements used to manufacture the verification apparatus of the invention may be suitably substituted for others which do not diverge from the scope defined by the claims included below.

## Claims

1. A positioning verification apparatus for metal tubular pieces that intervene in an extrusion process of metal tubular pieces of an extruder press, in which each of said parts or components to be verified defines a central axis, **characterized in that** it comprises a casing provided with a through hole through which the part or component to be verified can be passed, including at least three laser beam emitting optical sensors (6) arranged in a stationary way in the casing, said optical sensors being attached to a control unit through electrical connections, and arranged separately and radially around the through hole (7), such that the laser beam of each optical sensor (6) is oriented towards the central longitudinal axis defined by the through hole, the casing including cooling means to cool each optical sensor (6).

2. The positioning verification apparatus according to claim 1, **characterized in that** it includes coupling means to couple the casing to an inlet area of a container present in the extruder press.

3. The positioning verification apparatus according to claim 1, **characterized in that** the cooling means comprise at least one inlet (8) that can be connected to an external fluid supply source, one outlet (9) and channels present inside the casing linked to the inlet and the outlet to circulate a fluid, there being channels with ends (10) oriented towards the optical sensors (6).

4. The positioning verification apparatus according to claim 1, **characterized in that** the cooling means comprise an insert (11) that can be coupled to the casing which has a ring-shaped body that internally includes a hydraulic circuit provided with at least one inlet and one outlet for the liquid to be circulated throughout the inside of the hydraulic circuit.

5. The positioning verification apparatus according to claim 4, **characterized in that** it includes sealing means arranged between two faces facing each other of the insert (11) and the casing.

6. The positioning verification apparatus according to claim 5, **characterized in that** the sealing means comprise toric joints (12) arranged radially around the hydraulic circuit.

7. The positioning verification apparatus according to claim 1, **characterized in that** each optical sensor (6) is located inside a housing (13) that is located in recessed sections present inside the casing.

8. The positioning verification apparatus according to claim 7, **characterized in that** each housing comprises a box-shaped structure that includes securing means to attach to the casing.

9. The positioning verification apparatus according to claim 8, **characterized in that** the box-shaped structure is made from a plastic material resistant to high temperatures.

10. The positioning verification apparatus according to claim 9, **characterized in that** the plastic material consists of Teflon or Teflon-based plastic material.

11. The positioning verification apparatus according to any of the claims 1 to 10, **characterized in that** the casing is comprised of two front and rear casing bodies (1, 2), respectively, that can be coupled together.

12. The positioning verification apparatus according to claim 1, **characterized in that** it includes guide means present in each of the two front and rear bodies (1, 2).

13. The positioning verification apparatus according to claim 12, **characterized in that** the guide means comprise a male-female system present in an inner face of each of the two bodies (1, 2) that form the casing.

14. The positioning verification apparatus according to any of the claims 1 to 13, **characterized in that** the casing includes securing means.

15. The positioning verification apparatus according to claim 14, **characterized in that** the securing means have an extension (3) that protrudes from the casing that includes a through hole (4) to allow a tool to pass through the through hole (4).

16. The positioning verification apparatus according to any of the claims 1 to 15, **characterized in that** it has four optical sensors (6) arranged in a cruciform configuration around the through hole (7).

17. The positioning verification apparatus according to any of the claims 1 to 16, **characterized in that** the casing has an elongated tubular prolongation that extends outwards.

18. Verification equipment that comprises a moveable table, a verification apparatus according to any of the claim 1 to 17 and calibration means for calibrating the optical sensors present in the verification apparatus.

19. The verification equipment according to claim 18, **characterized in that** the calibration means comprise a cylindrical body that protrudes from the top of a horizontal surface, the cylindrical body being arranged around positioning means of the casing that forms part of the verification apparatus.

20. The verification equipment according to any of the claims 18 and 19, **characterized in that** the positioning means comprise a ring-shaped protruding element that protrudes from the horizontal surface and is arranged centrally with respect to the cylindrical body.

21. A positioning verification method for a puncturing mandrel of an extruder press with tubular pieces that comprises the steps of:
a) passing a puncturing mandrel through an area defined by light beam emitting optical sensors distributed radially from each other, such that when passing the puncturing mandrel through the sensors, the laser beams shine on the outer surface of the puncturing mandrel,
b) each optical sensor sends an electrical positioning signal of the point upon which the laser beam shines to a control unit as the puncturing mandrel to be verified moves linearly,
c) comparing the values detected by the optical sensors with a value of eccentricity and/or coaxiality previously established in the control unit.

22. The verification method according to claim 21, **characterized in that** it includes a prior step of calibrating each optical sensor.

23. The verification method according to claim 22, **characterized in that** the calibration step comprises the following steps:
i) place the verification apparatus inside the cylindrical body (23), such that the cylindrical body (23) is arranged through the through hole (7) of the verification apparatus.
ii) determine the existing deviation for the distance between each light beam emitting optical sensor (6) respect to ring-shaped protruding element (24), and an ideal distance between each of these laser beam emitting optical sensors (6) respect to ring-shaped protruding element (24).
iii) correct this existing deviation for the distance between each light beam emitting optical sensor (6) respect to ring-shaped protruding element (24).
